# EUROPÄISCHE PATENTANMELDUNG

(11) **EP 4 575 417 A1**
(43) Veröffentlichungstag der Anmeldung: **25.06.2025**
(21) Anmeldenummer: 23218700.5
(22) Anmeldetag: 20.12.2023
(51) Int. Cl.: G01D 11/30

(54) **WECHSELARMATUR ZUM ANORDNEN AN EIN MIT MEDIUM GEFÜLLTES BEHÄLTNIS, VERFAHREN ZUM BESTÜCKEN EINER WECHSELARMATUR MIT EINEM SENSOR UND VERFAHREN ZUM EINFÜHREN EINER MESSLANZE IN EIN MEDIUM**

(71) Anmelder: Exner & Tottewitz Besitz GBR, 76275 Ettlingen (DE)
(72) Erfinder: Tottewitz, Michael, 76646 Bruchsal (DE); Exner, Detlef, 71297 Mönsheim (DE); Cremers, Gabriel, 76359 Marxzell (DE); Hanselmann, Timo, 76199 Karlsruhe (DE)
(74) Vertreter: LBP Lemcke, Brommer & Partner Patentanwälte mbB

(57) **Zusammenfassung**

Die Erfindung betrifft eine Wechselarmatur zum Anordnen an ein mit Medium gefülltes Behältnis (8), mit einem Befestigungselement (7), einer Messlanze (1) und einer Verstelleinrichtung, wobei das Befestigungselement (7) zum Anordnen an das Behältnis (8) ausgebildet ist, die Messlanze (1) zum Aufnehmen eines Sensors ausgebildet ist, die Messlanze (1) entlang einer Verschiebeachse verschiebbar an dem Befestigungselement (7) angeordnet ist und die Verstelleinrichtung mit dem Befestigungselement (7) und der Messlanze (1) zusammenwirkend ausgebildet ist, um die Messlanze (1) entlang der Verschiebeachse zu verschieben. Wesentlich ist, dass die Verstelleinrichtung einen Elektromotor mit einem Rotor (4) und einem Stator (3) aufweist, dass zumindest der Rotor (4) eine Ausnehmung aufweist und die Verschiebeachse durch die Ausnehmung des Rotors verläuft.

## Beschreibung

Die vorliegende Erfindung betrifft eine Wechselarmatur zum Anordnen an ein mit Medium gefülltes Behältnis gemäß Anspruch 1. Des Weiteren betrifft die Erfindung ein Verfahren zum Bestücken einer Wechselarmatur gemäß Anspruch 10 sowie ein Verfahren zum Einführen einer Messlanze in ein Medium gemäß Anspruch 11.

Wechselarmaturen werden üblicherweise verwendet, um Messungen in einem zumindest teilweise stehenden oder fließenden Medium durchzuführen, welches von einem Behältnis umfasst ist. Beispiele für ein Behältnis sind eine geschlossene Rohrleitung oder ein ganz oder teilweise geschlossener Prozessbehälter. Von Bedeutung sind Wechselarmaturen insbesondere im Bereich der Prozessindustrie bei der Flüssigkeitsanalyse. Das Medium in dem Behältnis kann eine Flüssigkeit, ein Gas oder ein fließfähiger Feststoff (Pulver) oder eine Mischung daraus sein.

Wechselarmaturen umfassen üblicherweise eine Messlanze, welche zur Aufnahme eines Sensors ausgebildet ist sowie ein Befestigungselement. Die Messlanze ist verschiebbar an dem Befestigungselement angeordnet.

Typischerweise wird das Befestigungselement über einen Flansch oder einen andersgearteten Prozessanschluss mit dem Behältnis verbunden, wobei das Befestigungselement derart am Behältnis angeordnet ist, dass die Messlanze in einer Messposition in das Behältnis hineinragt: In der Messposition ragt ein endständiger Bereich der Messlanze über das Befestigungselement vor, sodass ein Messbereich der Messlanze, der beispielsweise ein Messfenster für optische Messungen oder eine Messöffnung für den unmittelbaren Kontakt eines Sensors mit dem Medium aufweisen kann, mit dem Medium im Behältnis in Kontakt steht.

In einer Ruheposition ist der Messbereich der Messlanze eingezogen und befindet sich innerhalb des Befestigungselementes, wodurch der Messbereich gegenüber dem Medium im Behältnis abgedichtet ist.

Mit den bisher bekannten Wechselarmaturen ist es somit möglich, den Messbereich der Messlanze wahlweise zwischen einer Ruheposition und einer Messposition zu verschieben. Das Verschieben der Messlanze wird hierbei manuell über ein händisches Verschieben oder automatisiert über ein pneumatisches Verschieben erzielt.

Aus DE102012200438A1 ist eine Wechselarmatur bekannt, welche pneumatisch die Verschiebung der Messlanze zwischen der Ruheposition und der Messposition ermöglicht.

Ein Problem der herkömmlichen pneumatisch betriebenen Wechselarmaturen ist die Versorgung der Wechselarmatur mit Druckluft, welche insbesondere bedingt durch Zuführsystem bedingte Leckagen energieineffizient ist. Darüber hinaus kann die Abhängigkeit von Druckluftquellen die Flexibilität der Anwendung der Wechselarmatur beeinträchtigen, insbesondere in Umgebungen, in denen der Zugang zu Druckluft begrenzt ist.

Der vorliegenden Erfindung liegt daher die Aufgabe zugrunde, ein energieeffiziente und flexibel einsetzbare Wechselarmatur und ein Verfahren zur deren Einrichtung und Betrieb bereitzustellen, welche einen kompakten Aufbau der Wechselarmatur ermöglicht.

Erfindungsgemäß wird diese Aufgabe durch eine Wechselarmatur zum Anordnen an ein mit Medium gefülltes Behältnis gemäß Anspruch 1 gelöst.

Vorteilhafte Ausgestaltungen der erfindungsgemäßen Wechselarmatur finden sich in den Ansprüchen 2 bis 9. Hiermit wird der Wortlaut sämtlicher Ansprüche explizit per Referenz in die Beschreibung einbezogen.

Die erfindungsgemäße Wechselarmatur zum Anordnen an ein mit Medium gefülltes Behältnis weist ein Befestigungselement, eine Messlanze und eine Verstelleinrichtung auf. Das Befestigungselement ist zum Anordnen an das Behältnis ausgebildet. Die Messlanze ist zum Aufnehmen eines Sensors ausgebildet. Die Messlanze ist entlang einer Verschiebeachse verschiebbar an dem Befestigungselement angeordnet.

Die Verstelleinrichtung ist mit dem Befestigungselement und der Messlanze zusammenwirkend ausgebildet, um die Messlanze entlang der Verschiebeachse zu verschieben.

Mittels der Verstelleinrichtung können somit durch Verschieben der Messlanze entlang der Verschiebeachse mehrere Positionen angefahren werden, so dass insbesondere ein in der Messlanze angeordneter Sensor in verschiedene Positionen bewegt werden kann.

Wesentlich ist, dass die Verstelleinrichtung einen Elektromotor mit einem Rotor und einem Stator aufweist, dass zumindest der Rotor eine Ausnehmung aufweist und die Verschiebeachse durch die Ausnehmung des Rotors verläuft.

Ein Vorteil, welcher sich aus der Verwendung eines Elektromotors als Teil der Verstelleinrichtung ergibt, ist, dass der elektrische Antrieb energieeffizient ist, da er nur dann Energie verbraucht, wenn eine Verschiebung erforderlich ist. Im Vergleich dazu erfordern pneumatische Systeme kontinuierlich angelegte Druckluft, was zu einem höheren Energieverbrauch führt. Zudem ist der elektrische Antrieb unabhängig von externen Druckluftquellen, was die Flexibilität der Verwendung der erfindungsgemäßen Wechselarmatur erhöht, insbesondere bei der Verwendung in komplexen Prozessanlagen oder bei der Verwendung an Behältern oder Rohren, welche im Freien stehen und keine naheliegende Druckluftquelle zur Verfügung stehen.

Ein weiterer Vorteil besteht darin, dass die erfindungsgemäße Wechselarmatur weniger anfällig für bestimmte Arten von Verschleiß oder Leckagen ist, die bei pneumatischen Systemen auftreten können. Dies führt zu einer erhöhten Zuverlässigkeit und geringeren Wartungskosten.

Aufgrund der Verwendung eines Rotors mit einer Ausnehmung, durch welche die Verschiebeachse verläuft, ergibt sich der Vorteil, dass durch das Anordnen der Verschiebeachse in der Ausnehmung des Rotors eine kompakte Bauweise erreicht wird. Dies ermöglicht eine effiziente Nutzung des verfügbaren Raums und trägt dazu bei, dass die Wechselarmatur in verschiedenen Umgebungen flexibel eingesetzt werden kann, auch in begrenzten räumlichen Verhältnissen.

Zudem bietet diese Anordnung die vorteilhafte Möglichkeit, eines schnellen und einfachen Anordnens eines Sensors in der Messlanze. Dies erleichtert Wartungs- und Austauscharbeiten erheblich, was wiederum die Ausfallzeiten reduziert und die Verfügbarkeit der Wechselarmatur verbessert.

Die Messlanze weist bevorzugt einen Messbereich auf, um in Benutzungskonfiguration bei an dem Behältnis angeordneter Messapparatur eine Messung an dem Medium des Behältnisses durchzuführen. Der Messbereich kann als Messfenster ausgebildet sein, insbesondere als strahlungsdurchlässiges Fenster, um mittels des in der Messlanze angeordneten Sensors eine bevorzugt optische Messung an dem Medium durchzuführen. Ebenso kann der Messbereich als Öffnung der Messlanze ausgebildet sein, so dass der in der Messlanze angeordnete Sensor während der Messung in unmittelbarem Kontakt mit dem Medium in dem Behältnis steht.

Es ist daher vorteilhaft, dass die Messlanze zwischen einer Messposition und einer Ruheposition verschiebbar an dem Befestigungselement angeordnet ist, so dass in der Messposition zumindest der Messbereich der Messlanze über das Befestigungselement hinausragt und in der Ruheposition der Messbereich der Messlanze innerhalb des Befestigungselements angeordnet ist und die Verstelleinrichtung mit dem Befestigungselement und der Messlanze zusammenwirkend ausgebildet ist, um die Messlanze zwischen der Messposition und der Ruheposition zu verschieben.

Der in der Messposition über das Befestigungselement hinausragende Messbereich steht somit in Benutzungskonfiguration bei an dem Behältnis angeordneter Wechselarmatur mit dem Medium des Behältnisses in Kontakt, so dass eine Messung an dem Medium durchgeführt werden kann.

Die Wechselarmatur ist bevorzugt derart ausgebildet, dass bei in der Ruheposition angeordneter Messlanze der Messbereich der Messlanze fluiddicht gegenüber dem Medium in dem Behälter abgedichtet ist. Hierdurch ergibt sich der Vorteil, dass der Sensor in der Ruheposition nicht von dem Medium beaufschlagt wird und gespült, kalibriert und/oder ausgetauscht werden kann, ohne dass Medium aus dem Behältnis in die Messlanze oder die Wechselarmatur eindringt.

Vorteilhafterweise ist die Wechselarmatur derart ausgebildet, dass sich Messlanze zumindest in einer der Positionen Messposition und Ruheposition, bevorzugt zumindest in der Ruheposition, in der Ausnehmung des Rotors angeordnet ist. Hierdurch wird eine kompakte und stabile Ausgestaltung der Wechselarmatur ermöglicht. Insbesondere ist es vorteilhaft, dass die Messlanze während des gesamten Verschiebewegs zwischen Messposition und Ruheposition in der Ausnehmung des Rotors geführt wird.

Vorteilhaft ist zudem, dass die Position der Messlanze in der Ausnehmung des Rotors dazu beiträgt, die Messlanze vor äußeren Einflüssen zu schützen, insbesondere gegenüber möglichen mechanischen Einflüssen.

Vorteilhafterweise ist der Elektromotor der Wechselarmatur als Hohlwellenmotor ausgebildet und die Verschiebeachse verläuft innerhalb der Hohlwelle des Hohlwellenmotors. Insbesondere ist bevorzugt die Messlanze verschiebbar in der Hohlwelle des Hohlwellenmotors angeordnet, wobei bevorzugt die Verschiebeachse der Messlanze parallel zu einer Längsachse der Hohlwelle des Hohlwellenmotors angeordnet ist.

Bevorzugt ist der Elektromotor der Verstelleinrichtung derart ausgebildet, dass der Rotor innerhalb des Stators angeordnet ist. Hierdurch ergibt sich ein kompakter Aufbau, da der Stator mit einem Außengehäuse der Wechselarmatur verbunden werden kann.

Es ist daher für einen kompakten Aufbau vorteilhaft, dass die Verschiebeachse der Messlanze parallel zu einer Drehachse des Rotors angeordnet ist.

Es liegt im Rahmen der Erfindung, den Elektromotor der Verstelleinrichtung als bürstenlosen Gleichstrommotor und/oder als Schrittmotor auszubilden.

Bei einer bevorzugten Ausführungsform des Elektromotors als bürstenlosen Gleichstrommotor ergibt sich der Vorteil, dass ein solcher Motor Wartungsarm ist. Zusätzlich verfügt er dank des verringerten Verschleißes über eine längere Betriebsdauer.

Bei einer bevorzugten Ausführungsform des Elektromotors als Schrittmotor ergibt sich der Vorteil, dass der Schrittmotor Wartungsarm ist, da er keine Bürsten oder Kommutatoren benötigt. Zudem ist über einen Schrittmotor eine genaue Positionierung der Messlanze möglich.

Es ist besonders vorteilhaft, den Elektromotor der Verstelleinrichtung als Reluktanzmotor auszubilden, insbesondere als einen geschalteten Reluktanzmotor oder einen Synchron-Reluktanzmotor.

Vorteilhaft ist hierbei, dass die Verluste hauptsächlich im ruhenden Stator entstehen, somit kann die entstehende Verlustwärme einfach nach außen hin abgeführt werden. Somit unterliegt der Rotor kaum einer Erwärmung, sodass die Sensorlanze nur gering, mit der Wärme der entstehenden Verluste beaufschlagt wird.

Ein weiterer Vorteil bei der Ausführung des Elektromotors als Reluktanzmotor besteht darin, dass sie keine seltenen Erden für die Herstellung von Dauermagneten benötigen. Dies reduziert die Abhängigkeit von begrenzten und umweltbelastenden Ressourcen, die bei der Förderung und Verarbeitung seltener Erden entstehen. Vorteilhafterweise ist der Reluktanzmotor daher frei von seltenen Erden.

Es liegt im Rahmen der Erfindung, die Drehbewegung des Rotors des Elektromotors mittels Zahnrädern oder Rollen, insbesondere Kunststoffrollen auf die Messlanze zu übertragen, um die Verschiebung zu erzielen. Insbesondere liegt es im Rahmen der Erfindung, dass die Messlanze zumindest eine Zahnstange aufweist und dass die Verstelleinrichtung ausgebildet ist, die Drehbewegung des Elektromotors mittels zumindest eines Zahnrades der Verstelleinrichtung auf die Zahnstange zum Ausbilden einer linearen Verschiebebewegung zu übertragen.

In einer vorteilhaften Ausführungsform steht der Rotor unmittelbar, insbesondere frei von einem zwischengeschalteten Getriebe, mit der Messlanze in Wirkverbindung, um die Verschiebung der Messlanze zu bewirken. Hierdurch ergibt sich der Vorteil der Einsparung mechanischer Komponenten im Vergleich zur Verwendung eines Getriebes.

In einer vorteilhaften Ausgestaltung steht der Rotor bevorzugt mittelbar über ein Getriebeeinrichtung der Wechselarmatur mit der Messlanze in Wirkverbindung, um die Verschiebung der Messlanze zu bewirken. Vorteilhafterweise weist die Verstelleinrichtung daher eine Getriebeeinrichtung auf, deren Antrieb mit dem Elektromotor und deren Abtrieb mit der Messlanze in Wirkverbindung steht. Dies ermöglicht eine höhere Krafteinwirkung auf die Messlanze mittels des Elektromotors im Vergleich mit einer Ausgestaltung ohne Getriebe. Insbesondere können hierdurch kompakte Elektromotoren verwendet werden, deren Drehmoment ohne Verwendung eines Getriebes eine erforderliche Krafteinwirkung auf die Messlanze nicht ermöglichen würde. Die Getriebeeinrichtung kann ein oder mehrere Getriebe aufweisen.

Bevorzugt weist die Getriebeeinrichtung ein mechanisches Getriebe, insbesondere ein formschlüssiges Getriebe auf.

Es liegt im Rahmen der Erfindung, dass die Getriebeeinrichtung ein oder mehrere Getriebe, bevorzugt genau ein Getriebe aus der Liste
- Planetengetriebe
- Wellgetriebe
- Zykloidgetriebe
- Zahnradgetriebe
- Zahnriemengetriebe
- Kettengetriebe
- Lamellenkettengetriebe zwischen kegelradähnlichen Rädern
- Riemengetriebe
- Kegelringgetriebe
- Wälzkörpergetriebe
- Rollringgetriebe
aufweist.

Insbesondere ist es vorteilhaft, dass die Getriebeeinrichtung ein Zykloidgetriebe aufweist, um eine kompakte Bauform zu erzielen sowie aufgrund der nachfolgend genannte Vorteile.

Die Getriebeeinrichtung weist bevorzugt ein Schraubgetriebe, bevorzugt mit einem Spindeltrieb und einer Gewindespindel, auf, um eine rotatorische Bewegung des Elektromotors in eine lineare Bewegung der Messlanze umzuwandeln. Hierdurch wird eine kompakte Bauform erzielt. Insbesondere ist es vorteilhaft, die Messlanze als Teil des Schraubgetriebes, insbesondere als Gewindespindel auszubilden.

In einer vorteilhaften Ausführungsform ist der Abtrieb des Elektromotors frei von Zwischenschaltung eines weiteren Getriebes mit dem Schraubgetriebe verbunden. In einer alternativen vorteilhaften Ausgestaltung weist die Getriebeeinrichtung zusätzlich zu dem Schraubgetriebe zumindest ein weiteres, bevorzugt genau ein weiteres Getriebe auf, insbesondere ein Getriebe aus der oben aufgeführten Liste der Getriebe, bevorzugt ein Zykloidgetriebe.

Bei einer weiter bevorzugten Ausführungsform weist der Spindeltrieb der Getriebeeinrichtung eine Gewindespindel und eine Spindelmutter auf, wobei die Spindelmutter drehbar auf der Gewindespindel angeordnet ist und wobei der Elektromotor mit der Spindelmutter wirkverbunden ist, um die Spindelmutter zu drehen. Insbesondere ist es hierbei vorteilhaft, die Messlanze als Gewindespindel auszubilden. Vorteilhaft ist hierbei die kompakte Bauweise, die bevorzugt durch die Ausbildung der Messlanze als Spindeltrieb, insbesondere als Gewindestange, erreicht wird.

Bei einer weiter bevorzugten Ausführungsform weist die Getriebeeinrichtung ein Kugelgewindetrieb auf. Vorteilhaft ist hierbei die durch die Kugeln verringerte Reibung. Insbesondere ist es für eine kompakte Bauform vorteilhaft, die Messlanze als Kugelspindel oder Kugelumlaufspindel auszubilden.

Ein weiterer Vorteil der Verwendung der als Gewindespindel ausgebildeten Messlanze als Teil des Spindeltriebes besteht darin, dass eine reibungsarme und präzise lineare Bewegung der Messlanze ermöglicht wird.

Bei einer weiteren bevorzugten Ausführungsform ist die Ausbildung der Messlanze als Gewindespindel mehrstückig ausgeführt. Vorteilhaft ist hierbei die Verminderung des Fertigungsaufwandes.

Bei einer bevorzugten Ausführungsform weist die Verstelleinrichtung eine Getriebeeinrichtung mit einem Zykloidgetriebe und einem Spindeltrieb auf, wobei das Zykloidgetriebe zur Übertragung des durch den Elektromotor aufgebrachten Drehmoments auf den Spindeltrieb ausgebildet ist. Vorteilhaft ist hierbei die kompakte Bauweise von Zykloidgetrieben, die eine effiziente Nutzung des verfügbaren Bauraums in der Wechselarmatur ermöglichen. Insbesondere ist hierbei es für eine kompakte Bauform vorteilhaft, die Messlanze als Gewindespindel auszubilden.

Vorteilhaft ist zudem, dass durch den Einsatz von Zykloidgetrieben der Wartungsaufwand verringert werden kann, da Zykloidgetriebe aufgrund ihrer Ausgestaltung weniger anfällig für Verschleiß sind.

Des Weiteren ergibt sich der Vorteil, dass auf kleinen Bauraum eine hohe Übersetzung erzielt wird, da Zykloidgetriebe durch ihre Bauweise ein großes Übersetzungsverhältnis in einem kleinen Bauraum ermöglichen.

Die Kombination aus Zykloidgetriebe und Spindeltrieb ermöglicht eine kompakte Bauweise der Verstelleinrichtung. Dies ist besonders vorteilhaft, um den zur Verfügung stehenden Bauraum effizient zu nutzen. Des weiteren weist der Spindeltrieb einen selbsthemmenden Charakter auf, welcher gewährleistet, dass die Messlanze stabil in der Ist-Position verweilt und nicht ungewollt verschoben wird.

Bei einer bevorzugten Ausführungsform weist das Zykloidgetriebe der Getriebeeinrichtung eine Ausnehmung auf und die Verschieberichtung der Messlanze verläuft durch diese Ausnehmung des Zykloidgetriebes. Insbesondere ist die Messlanze bevorzugt zumindest in der Ruheposition und/oder in der Messposition in der Ausnehmung des Zykloidgetriebes angeordnet. Bevorzugt wird die Messlanze während des Verschiebeweges zwischen Ruheposition und Messposition in der Ausnehmung des Zykloidgetriebes geführt. Hierdurch ergibt sich ein kompakter und robuster Aufbau.

Bei einer weiteren bevorzugten Ausführungsform ist das Zykloidgetriebe der Getriebeeinrichtung zwischen Elektromotor und der zur Anordnung an das Behältnis ausgebildeten Seite des Befestigungselements angeordnet. Ein Vorteil dieser Anordnung besteht darin, dass sie eine bessere Zugänglichkeit für Wartungs- und Reparaturarbeiten bietet. Durch die Unterbringung des Zykloidgetriebes unterhalb des Elektromotors wird der Zugang zu den Antriebskomponenten erleichtert. Insbesondere kann eine Stromversorgung des Elektromotors über die dem Behältnis abgewandte Seite der Wechselarmatur erfolgen, ohne dass die Stromleitungen an dem Zykloidgetriebe vorbei oder durch das Getriebe hindurchgeführt werden müssen.

Bei einer bevorzugten Ausführungsform ist das Zykloidgetriebe als zykloides Exzentergetriebe bevorzugt als mehrfach zykloides Exzentergetriebe, insbesondere bevorzugt als zweifach zykloides Exzentergetriebe ausgebildet. Bei einem mehrfach Zykloidgetriebe werden mehrere Zykloidscheiben verwendet, welche versetzt zueinander angeordnet sind. Im Falle des zweifach zykloiden Exzentergetriebes werden zwei um 180° versetzte Zykloidscheiben verwendet. Vorteilhaft ist hierbei, dass die durch den Exzenter entstehenden Unwuchten ausgeglichen werden. Dies führt zu einem ruhigeren Lauf und mindert die Belastung der Komponenten.

Bei einer bevorzugten Ausführungsform weist das Zykloidgetriebe eine Übersetzung mit dem Übersetzungsverhältnis i (Antrieb:Abtrieb) von i= 5:1 bis i=100:1, bevorzugt i=8:1 bis i=15:1 auf.

Bei einer weiteren bevorzugten Ausführungsform weist die Getriebeeinrichtung einen Riemen und Riemenscheiben auf, wobei zumindest eine der Riemenscheiben mit dem Elektromotor verbunden ist und die Messlanze mittels des Riemens bewegbar ist. Dies ermöglicht eine effiziente und kostengünstige Übertragung der Rotationsbewegung in eine lineare Bewegung.

Bei einer bevorzugten Ausführungsform weist die Verstelleinrichtung eine Getriebeeinrichtung mit einem Planetengetriebe oder einem Wellengetriebe auf, wobei das Planetengetriebe oder das Wellengetriebe zur Übertragung des durch den Elektromotor aufgebrachten Drehmoments auf den Spindeltrieb ausgebildet ist. Vorteilhaft ist hierbei, dass durch den Einsatz von Planetengetriebe sowie Wellengetriebe der Wartungsaufwand verringert werden kann, da Planetengetriebe sowie Wellengetriebe aufgrund ihrer Ausgestaltung weniger anfällig für Verschleiß sind.

Bei einer weiteren bevorzugten Ausführungsform weist die Getriebeeinrichtung eine Kugelumlaufspindel mit einer Spindel mit Kugellagern auf, durch welche die Messlanze bewegbar ist. Vorteilhaft ist hierbei, die reibungsarme Bewegung der Komponenten und die genaue Positionierung der Messlanze, was die Langlebigkeit und Präzision der Wechselarmatur verbessert.

Bei einer weiteren bevorzugten Ausführungsform weist die Getriebeeinrichtung eine Zahnstange mit einem Zahnrad auf, wobei das Zahnrad mit dem Zykloidgetriebe verbunden ist und wobei die Messlanze zumindest abschnittsweise als Zahnstange ausgebildet ist. Vorteilhaft hierbei ist, dass durch die Verwendung der Zahnstange und dem Zahnrad eine robuste und effiziente sowie kompakte Anordnung der Komponenten möglich ist.

Bei einer weiteren bevorzugten Ausführungsform weist die Verstelleinrichtung ein Kegelradgetriebe auf, wobei das Tellerrad des Kegelradgetriebes mit dem Rotor des Elektromotors verbunden ist und das Ritzel des Kegelradgetriebes mit einem Zahnrad verbunden ist und wobei die Messlanze zumindest abschnittsweise als Zahnstange ausgebildet ist. Hierbei greift das Zahnrad in die Zahnstange der Messlanze, sodass durch eine Drehbewegung des Zahnrades die Messlanze linear verschoben wird. Vorteilhaft hierbei ist, dass durch die Verwendung von Zahnstange und Zahnrad eine robuste und kompakte Anordnung der Komponenten möglich ist. Zudem ermöglicht das Kegelradgetriebe eine einfache Drehzahlübersetzung.

Bei einer weiteren bevorzugten Ausführungsform weist die Verstelleinrichtung ein Handbetätigungsmechanismus auf, wobei dieser ausgebildet ist, um durch eine Handbetätigung die Messlanze zwischen der Messposition und der Ruheposition zu verschieben.

Der Handbetätigungsmechanismus, ermöglicht es einen manuellen Notbetrieb zu ermöglichen, hierbei ist die Wechselarmatur in einem stromlosen Zustand und die elektrischen Komponenten somit entkoppelt. Hierfür weist der Handbetätigungsmechanismus ein Handbetätigungselement auf, bevorzugt einen Hebel oder ein Rad. Dieses Handbetätigungselement ist für den Nutzer zugänglich und ermöglicht es, beispielsweise durch eine Rotationsbewegung die Messlanze zwischen der Messposition und der Ruheposition zu verschieben. Bevorzugt ist das Handbetätigungselement lösbar an der Wechselarmatur anordenbar. Bei einer vorteilhaften Ausführungsform wird durch die Rotationsbewegung des Handbetätigungselements der Rotor gedreht.

Bei einer vorteilhaften Ausführungsform der Wechselarmatur mit Handbetätigungsmechanismus, weist die Verstelleinrichtung einen Verriegelungsmechanismus auf, welcher den Handbetätigungsmechanismus für eine Handbetätigung freigibt. Somit kann verhindert werden, dass der Handmechanismus unbeabsichtigt verwendet wird. Zudem kann verhindert werden, dass im bestromten Zustand eine Handbetätigung erfolgt. Vorteilhaft ist, dass durch den Verriegelungsmechanismus Wartungs- und Inspektionsarbeiten erleichtert werden.

Bei einer vorteilhaften Ausführungsform weist die Wechselarmatur zwischen der Messposition und der Ruheposition zumindest eine Zwischenposition auf, wobei die Verstelleinrichtung ausgebildet ist, die Messlanze wahlweise in die Messposition, Zwischenposition und Ruheposition zu verfahren. Dies ermöglicht eine flexible Anpassung der Wechselarmaturje nach den spezifischen Anforderungen und Anwendungsszenarien, wodurch eine präzise Positionierung der Messlanze in sich unterscheidenden Positionen erreicht wird.

Bei einer vorteilhaften Ausführungsform umfasst die Wechselarmatur ein zusätzliches Abschirmelement, welches dazu dient, unerwünschte elektromagnetische Interferenzen abzuschirmen und die elektromagnetische Verträglichkeit der Wechselarmatur zu verbessern. Das Abschirmelement ist hierbei aus elektrisch leitfähigem Material ausgeführt. Diese Maßnahme trägt dazu bei, die Zuverlässigkeit und Störfestigkeit der Wechselarmatur in verschiedenen Einsatzumgebungen zu verbessern, insbesondere trägt diese Maßnahme dazu bei, eine Beeinträchtigung von elektronischen Komponenten, insbesondere von Messtechnik zu verhindern.

Bei einer vorteilhaften Ausführungsform umfasst die Wechselarmatur ein zusätzliches Bremselement, das dazu dient, das Bewegen der Messlanze zu verhindern, wenn sich diese in der Messposition, Ruheposition oder einer Zwischenposition befindet. Bevorzugt ist das Bremselement als einfache Rastung, besonders bevorzugt als Konusbremse ausgebildet. Vorteilhaft ist hierbei, dass die Messlanze an einer Bewegung behindert wird, wenn der Elektromotor stromlos ist. Insbesondere ist dies von Vorteil, wenn das Medium des Behälters unter Druck steht, da dies dazu führen kann, dass sich die Messlanze unerwünscht verschiebt.

Bei einer weiteren vorteilhaften Ausführungsform ist die Messlanze zentrisch in der Ausnehmung des Zykloidgetriebes und zentrisch in der Ausnehmung des Rotors angeordnet, sodass das Zykloidgetriebe sowie der Rotor konzentrisch um die Messlanze angeordnet sind. Vorteilhaft ist hierbei, dass eine symmetrische Ausrichtung erreicht wird, was zu einer verbesserten Stabilität führt. Ein weiterer Vorteil besteht darin, dass die konzentrische Anordnung eine kompaktere Bauweise ermöglicht wird.

Bei einer weiteren vorteilhaften Ausführungsform verfügt die Wechselarmatur über eine Reinigungsvorrichtung mit einer fluiddichten Spülkammer und einer Spülmediumzufuhr. Die Spülkammer weist eine Ausnehmung auf, durch die die Messlanze zumindest in der Messposition angeordnet ist, und in der die Messlanze in einer Zwischenposition zumindest mit dem Messbereich der Messlanze angeordnet ist. Vorteilhaft ist hierbei, dass die Ablagerungen oder Verunreinigungen, welche sich im Messbereich der Messlanze durch den Kontakt mit dem Medium des Behälters ansammeln, in der Spülkammer mittels eines Spülmediums gereinigt werden können. Dies führt zur Verbesserung der Messgenauigkeit und die Zuverlässigkeit der Messung des Mediums wird somit erhöht

Bei einer weiteren vorteilhaften Ausführungsform verfügt die Wechselarmatur über eine Lagenerkennung, bevorzugt weist die Lageerkennung Hall-Sensoren auf, um das Erreichen von Positionen, wie die Ruheposition, Messposition oder eine Zwischenposition zu erfassen. Vorteilhaft ist hierbei, dass die Lagenerkennung Informationen über die Position der Messlanze liefert. Zudem wird durch den Einsatz von Hall-Sensoren eine kontaktlose Erfassung ermöglicht, was den Wartungsaufwand verringert.

Bei einer weiteren vorteilhaften Ausführungsform verfügt die Wechselarmatur über einen Verfahrschutz, um ein Verschieben der Messlanze ohne ein in sie eingeführten Sensor, in das Behältnis zu verhindern. Vorteilhaft ist hierbei, dass der Verfahrschutz eine zusätzliche Sicherheitsebene schafft, um ungewollte Bewegungen der Messlanze zu unterbinden.

Das Befestigungselement kann in an sich bekannter Weise ausgebildet sein. Insbesondere liegt es im Rahmen der Erfindung, dass Befestigungselement mehrteilig auszubilden, insbesondere mit einem Anschlusselement zum Anschluss und Befestigen der Wechselarmatur an das Behältnis, insbesondere einen Flansch des Behältnisses und mit einer Aufnahme für die Messlanze wobei die Messlanze verschiebbar in der Aufnahme angeordnet ist.

Es liegt im Rahmen der Erfindung, dass das Befestigungselement derart ausgebildet ist, dass sich das Befestigungselement, insbesondere eine Aufnahme des Befestigungselementes bei an dem Behältnis angeordneter Wechselarmatur in das Innere des Behältnisses erstreckt. Insbesondere liegt es im Rahmen der Erfindung, dass sich auch in der Ruheposition der Messbereich der Messlanze im Inneren des Behältnisses befindet, wobei bei dieser vorteilhaften Ausgestaltung der Messbereich in der Ruheposition in dem Befestigungselement angeordnet ist und somit obwohl sich der Messbereich auch in der Ruheposition im Inneren des Behältnisses befindet, kein Kontakt zwischen Medium und Messbereich der Messlanze besteht, aufgrund der Abschirmung durch das Befestigungselement.

Die zuvor genannte Aufgabe wird durch ein erfindungsgemäßes Verfahren zum Bestücken einer Wechselarmatur mit einem Sensor gemäß Anspruch 10 gelöst. Das Verfahren weist die folgenden Verfahrensschritte auf:
- Bereitstellen einer Wechselarmatur mit einem Befestigungselement zum Anordnen an ein Behältnis, einer Messlanze zum Aufnehmen eines Sensors und einer Verstelleinrichtung,
   wobei die Verstelleinrichtung einen Elektromotor mit einem Rotor und einem Stator aufweist und der Rotor eine Ausnehmung aufweist;
   insbesondere Bereitstellen einer erfindungsgemäßen Wechselarmatur, bevorzugt einer bevorzugten Ausführungsform hiervon;
- Einführen des Sensors in die Messlanze, wobei der Sensor durch die Ausnehmung des Rotors geführt wird.

Vorteilhaft hierbei ist die präzise Sensorplatzierung, da das Einführen durch die Ausnehmung im Rotor eine genaue Positionierung gewährleistet. Weiterhin ist vorteilhaft, dass das Verfahren die Verwendung einer kompakten Wechselarmatur ermöglicht. Weiterhin ist das Verfahren vorteilhaft, da somit eine Vermeidung von Sensorverunreinigungen erzielt wird, da die Führung des Sensors durch die Ausnehmung im Rotor das Risiko von Verunreinigungen reduziert. Ein weiterer Vorteil ist, dass somit eine konsistente Sensorausrichtung erzielt wird, da die Ausnehmung im Rotor eine gleichbleibende Ausrichtung des Sensors gewährleistet.

Bei einer vorteilhaften Ausführungsform ist die Wechselarmatur als erfindungsgemäße Wechselarmatur, insbesondere eine bevorzugte Ausbildung hiervon, ausgeführt.

Die eingangs genannte Aufgabe wird weiterhin durch ein erfindungsgemäßes Verfahren zum Einführen eines Messbereichs einer Messlanze in einem Medium gemäß Anspruch 11 gelöst, welches die folgenden Verfahrensschritte aufweist:
Bereitstellen einer Wechselarmatur mit einem Befestigungselement zum Anordnen an ein Behältnis, einer Messlanze zum Aufnehmen eines Sensors und einer Verstelleinrichtung;
wobei die Verstelleinrichtung einen Elektromotor mit einem Rotor und einem Stator aufweist und der Rotor eine Ausnehmung aufweist und die Messlanze einen bevorzugt endständig angeordneten Messbereich aufweist,
und wobei während des Einführens die Messlanze innerhalb der Ausnehmung des Rotors bewegt wird. Ein solches Befestigungselement ist in DE102012200438A1 beschrieben.

Vorteilhaft hierbei ist die gezielte Bewegung, insbesondere Verschiebung entlang einer geradlinigen Verschiebeachse der Messlanze innerhalb der Ausnehmung des Rotors, da dies zu einer genauen Positionierung im Medium führt. Vorteilhaft ist zudem die Minimierung von Verunreinigungen, da die gezielte Bewegung innerhalb der Ausnehmung das Risiko von Verunreinigungen reduziert und die Messlanze vor äußeren Einflüssen schützt. Weiterhin ist vorteilhaft, dass dieses Verfahren einen kompakten Aufbau des Wechselarmatur ermöglicht.

Bei einer vorteilhaften Ausführungsform ist die Wechselarmatur als erfindungsgemäße Wechselarmatur, insbesondere eine vorteilhaften Ausführungsform hiervon, ausgeführt.

Weitere Merkmale und Vorteile der vorliegenden Erfindung ergeben sich aus den nachfolgenden Zeichnungen und Ausführungsbeispielen, anhand derer die Erfindung beispielhaft näher erläutert werden soll, ohne die Erfindung auf diese zu beschränken. Dabei zeigt:
- Figur 1: eine schematische Darstellung eines ersten Ausführungsbeispiels einer erfindungsgemäßen Wechselarmatur in Ruheposition;
- Figur 2: eine schematische Darstellung der ersten Ausführungsbeispiels einer erfindungsgemäßen Wechselarmatur in Messposition;
- Figur 3: eine schematische Darstellung eines zweiten Ausführungsbeispiels einer erfindungsgemäßen Wechselarmatur in Ruheposition und
- Figur 4: eine schematische Darstellung eines dritten Ausführungsbeispiels einer erfindungsgemäßen Wechselarmatur in Ruheposition.

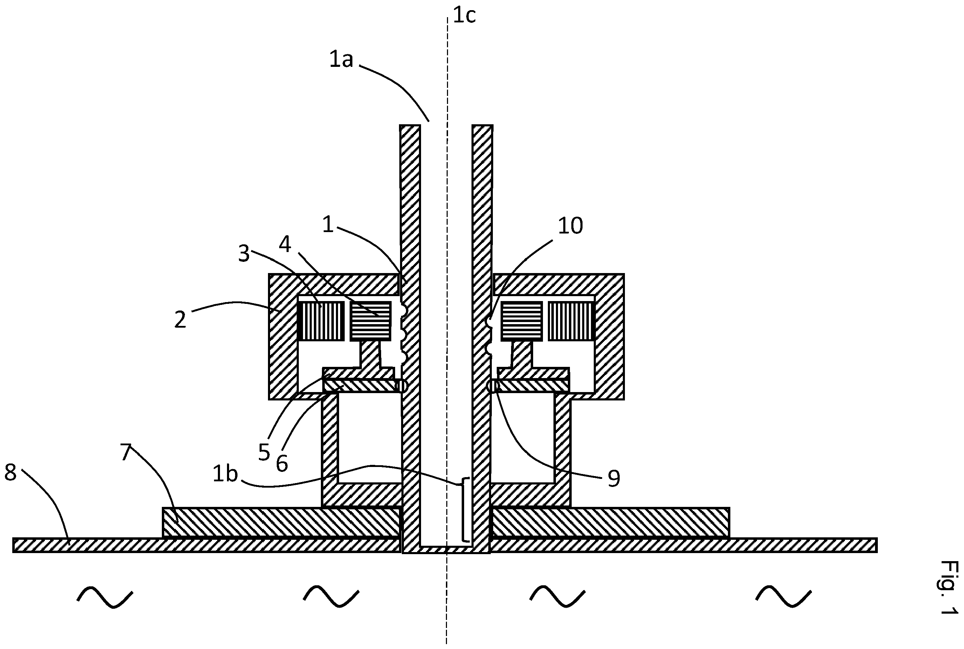

In den Figuren 1, 2, 3 und 4 bezeichnen gleiche Bezugszeichen gleiche oder gleich wirkende Elemente.

Die Figur 1 zeigt eine schematische Darstellung eines ersten Ausführungsbeispiels einer erfindungsgemäßen Wechselarmatur. Die Wechselarmatur weist ein Befestigungselement 7 auf, welches an ein mit Medium gefülltes Behältnis 8 angeordnet ist. Die Wechselarmatur weist eine Verstelleinrichtung mit einem Elektromotor auf, wobei der Elektromotor einen Rotor 4 und einen Stator 3 aufweist. Die Messlanze 1 weist einen Hohlraum 1a auf, in welchen ein Sensor eingeführt werden kann, dieser Sensor ist in der Abbildung nicht dargestellt. Die Messlanze 1 ist entlang der Verschiebeachse 1c linear verschiebbar an dem Befestigungselement 1 angeordnet.

Das Befestigungselement 7 weist eine Flanschförmige Basis auf, welche eine Ausnehmung aufweist. Das Befestigungselement 7 weist weiterhin ein Gehäuse 2 der Wechselarmatur auf. Das Gehäuse 2 weist in diesem Fall eine rotationssymmetrische Form mit einer oberen und einer unteren Ausnehmung auf. Das Gehäuse 2 schließt einen Hohlraum ein, in welchem die Verstelleinheit mit ihrem Elektromotor, welcher in diesem Ausführungsbeispiel als geschalteter Reluktanzmotor ausgeführt ist, angeordnet ist. Die Statorzähne des Stators 3 sind mit Spulen bewickelt und der Rotor 4 weist eine mittige Ausnehmung auf, wobei die Ausnehmung des Rotors 4 und die obere sowie untere Ausnehmung des Gehäuses 2 koaxial ausgerichtet sind. Der Stator 3 ist mit dem Gehäuse 2 verbunden, und der Rotor 4 ist drehbar gelagert.

Die Messlanze 1 der Wechselarmatur ist zentrisch durch die Ausnehmung des Rotors 4, sowie durch die obere und untere Ausnehmung des Gehäuses 2 angeordnet. Die Messlanze 1 befindet sich bei dem gezeigten Ausführungsbeispiel in der Ruheposition. In der Ruheposition ist die Messlanze 1 nicht in das Behältnis 8 eingeführt.

Die Messlanze 1 weist einen Messbereich 1b auf, welcher vorliegend als Glasfenster ausgebildet ist. Mittels des in der Messlanze 1 angeordneten Sensors kann somit eine kontaktfreie, optische Messung des Mediums durch das Glasfenster erfolgen. In einer alternativen Ausgestaltung ist der Messbereich 1b als Öffnung in der Messlanze ausgebildet, so dass ein unmittelbarer Kontakt zwischen Sensor und Medium möglich ist.

Bei der Darstellung gemäß Figur 1 befindet sich die Messlanze in der Ruheposition, so dass sich der Messbereich in dem Befestigungselement befindet und somit kein Kontakt zwischen Messbereich und Medium besteht.

Die Verstelleinheit weist bei diesem Ausführungsbeispiel eine Getriebeeinrichtung mit einem Zykloidgetriebe und einem Spindeltrieb auf, wobei das Zykloidgetriebe zur Übertragung des durch den Elektromotor aufgebrachten Drehmoments auf den Spindeltrieb ausgebildet ist.

Die Messlanze 1 weist ein Außengewinde auf und bildet somit die Gewindespindel 10 des Spindeltriebes aus. Des Weiteren weist der Spindeltrieb eine Spindelmutter 9 auf.

Das Zykloidgetriebe verfügt in dieser Ausführungsform über eine hohl ausgestaltete Exzenterwelle 5, die die Messlanze 1 umgibt. Ebenso ist eine Rollenscheibe 6 vorhanden, die eine Ausnehmung aufweist und somit die Messlanze 1 umschließt. Die Rollenscheibe 6 weist vertikal zur Erstreckung der Rollscheibe angeordnete Rollen auf. Des Weiteren weist das Zykloidgetriebe eine Kurvenscheibe sowie feststehende Abrollbolzen auf, die ringförmig um die Exzenterwelle 5 angeordnet sind. Die Exzenterwelle 5 ist mit dem Rotor 4 verbunden. Die Rollenscheibe 6 ist über eine zentrische Abtriebswelle mit der Spindelmutter 9 des Spindeltriebes verbunden. Die Kurvenscheibe ist um die Exzenterwelle 5 angeordnet.

Treibt der Rotor 4 die Exzenterwelle 5 an, so wird die Kurvenscheibe exzentrisch bewegt, sodass die Kurvenscheibe um ihre Symmetrieachse rotiert. In der Kurvenscheibe sind Löcher angebracht, die relativ zur Exzenterwelle 5 rotieren. In diese Löcher greifen die Rollen der Rollenscheibe 6. Die Kurvenscheibe treibt auf diese Weise die Rollenscheibe 6 an, an der auch die zentrisch gelagerte Abtriebswelle angeordnet ist und koaxial zur Antriebswelle sitzt.

Die mit der Antriebswelle verbundene Spindelmutter 9 ist eingreifend in die Gewindespindel 10 der Messlanze 1 angeordnet, sodass die rotatorische Bewegung der Spindelmutter 9 zu einer translatorischen Bewegung der Messlanze 1 führt. Somit wird die Drehbewegung der Spindelmutter 9 über die Gewindespindel 10 zu einer linearen Bewegung der Messlanze 1 gewandelt.

Die Übersetzung des Zykloidgetriebes ist hierbei i (Antrieb:Abtrieb) = 10:1.

Um die Position des Rotors 4 zu bestimmen, weist die Wechselarmatur einen Drehgeber auf. Dieser Drehgeber ist bei diesem Ausführungsbeispiel mit Hall-Sensoren ausgebildet. Bei einem alternativen Ausführungsbeispiel weist der Drehgeber optischer Sensoren zur Positionsbestimmung auf.

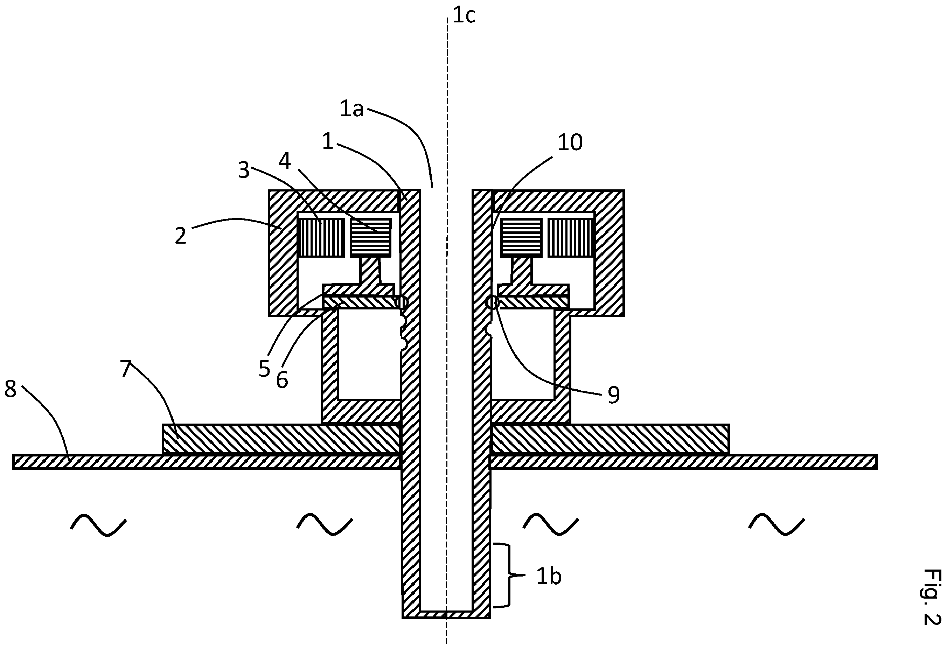

In Figur 2 ist die Messlanze in ihrer Messposition gezeigt, hierbei ragt die Messlanze 1 in das mit Medium gefülltem Behältnis 8 hinein. Insbesondere steht der Messbereich 1b in Kontakt mit dem Medium, um eine Messung zu ermöglichen.

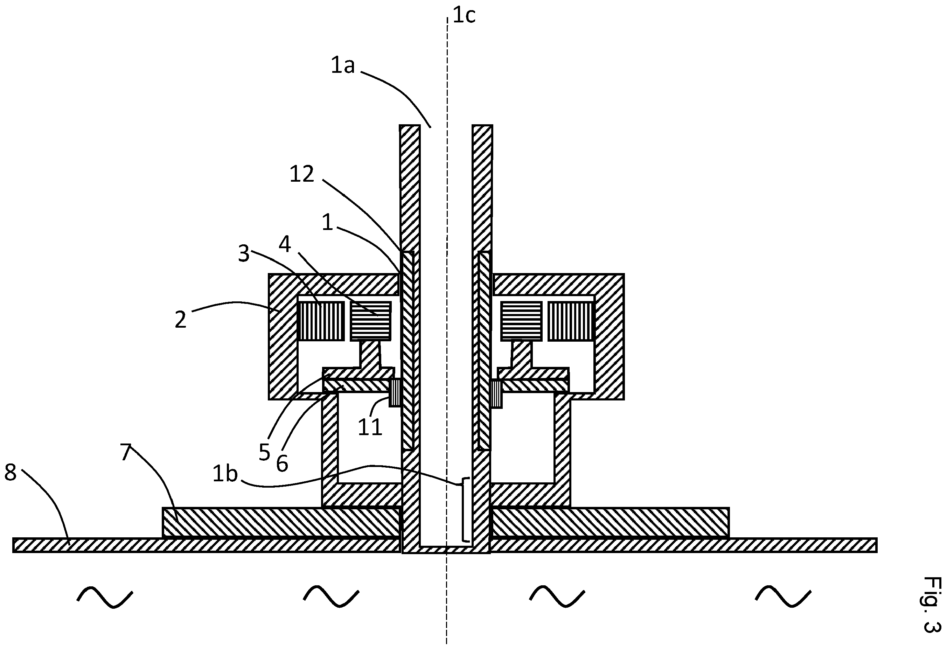

In Figur 3 ist ein zweites Ausführungsbeispiel einer erfindungsgemäßen Wechselarmatur gezeigt, welche sich von dem Ausführungsbeispiel in Figur 1 und 2 darin unterscheidet, dass die Getriebeeinrichtung statt eines Spindeltriebes eine als Zahnstange 12 ausgebildete Messlanze 1 aufweist und das Zykloidgetriebe über ein Tellerrad und einem Ritzel mit einem in die Zahnstange 12 greifendes Zahnrad 11 verbunden ist. Somit wird die Drehbewegung des Tellerrades über das Ritzel und das damit verbundene Zahnrad 11 zu einer linearen Bewegung der als Zahnstange 2 ausgebildeten Messlanze 1 gewandelt.

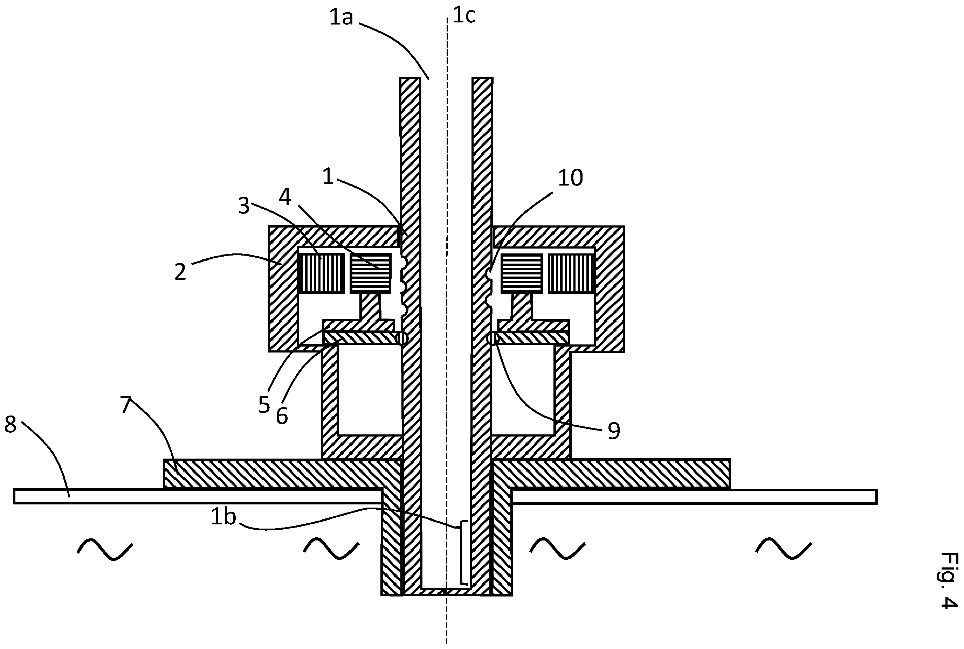

Figur 4 zeigt eine Abwandlung des in Figur 1 dargestellten Ausführungsbeispiels. Zur Vermeidung von Wiederholungen wird nachfolgend lediglich auf die wesentlichen Unterschiede eingegangen: Bei dem in Figur 4 gezeigten Ausführungsbeispiel ist das Befestigungselement 7 derart ausgebildet, dass es in das Behältnis 8 hineinragt. Bei der Darstellung gemäß Figur 4 befindet sich die Messlanze 1 in Ruheposition. Auch in der Ruheposition befindet sich das untere Ende der Messlanze und insbesondere der Messbereich 1b im Inneren des Behältnisses 8. Der Messbereich befindet sich jedoch zusätzlich im Inneren des Befestigungselements 7 und ist somit gegenüber dem Medium abgeschirmt, so dass in der Ruheposition kein Kontakt zwischen Medium und Messbereiche 1b besteht.

In der - nicht dargestellten - Messposition ist die Messlanze analog zu der Darstellung in Figur 2 nach unten verschoben, so dass das untere Ende der Messlanze 1 über das Befestigungselement 7 hinausragt und sich der Messbereich 1b in unmittelbaren Kontakt mit dem Medium befindet.

### Bezugszeichenliste

- 1: Messlanze
- 1a: Hohlraum der Messlanze
- 1b: Messbereich der Messlanze
- 1c: Verschiebeachse der Messlanze
- 2: Gehäuse
- 3: Stator des Elektromotors
- 4: Rotor des Elektromotors
- 5: Exzenterwelle des Zykloidgetriebes
- 6: Rollenscheibe mit Abtriebswelle
- 7: Befestigungselement
- 8: Behältnis
- 9: Spindelmutter
- 10: Gewindespindel
- 11: Zahnrad
- 12: Zahnstange

## Patentansprüche

1. Wechselarmatur zum Anordnen an ein mit Medium gefülltes Behältnis (8),
mit einem Befestigungselement (7), einer Messlanze (1) und einer Verstelleinrichtung,
wobei das Befestigungselement (7) zum Anordnen an das Behältnis (8) ausgebildet ist, die Messlanze (1) zum Aufnehmen eines Sensors ausgebildet ist, die Messlanze (1) entlang einer Verschiebeachse (1c) verschiebbar an dem Befestigungselement (7) angeordnet ist und
die Verstelleinrichtung mit dem Befestigungselement (7) und der Messlanze (1) zusammenwirkend ausgebildet ist, um die Messlanze (1) entlang der Verschiebeachse (1c) zu verschieben,
**dadurch gekennzeichnet,**
**dass** die Verstelleinrichtung einen Elektromotor mit einem Rotor (4) und einem Stator (3) aufweist,
**dass** zumindest der Rotor (4) eine Ausnehmung aufweist und die Verschiebeachse (1c) durch die Ausnehmung des Rotors verläuft.

2. Wechselarmatur nach Anspruch 1,
**dadurch gekennzeichnet,**
**dass** die Messlanze (1) zwischen einer Messposition und einer Ruheposition verschiebbar an dem Befestigungselement (7) angeordnet ist, so dass in der Messposition zumindest ein Messbereich (1b) der Messlanze (1) über das Befestigungselement (7) hinausragt und in der Ruheposition der Messbereich (1b) der Messlanze (1) innerhalb des Befestigungselements (7) angeordnet ist und die Verstelleinrichtung mit dem Befestigungselement (7) und der Messlanze (1) zusammenwirkend ausgebildet ist, um die Messlanze (1) zwischen der Messposition und der Ruheposition zu verschieben, insbesondere
**dass** die Wechselarmatur derart ausgebildet, das bei in der Ruheposition angeordneter Messlanze (1) der Messbereich (1b) der Messlanze fluiddicht gegenüber dem Medium in dem Behälter abgedichtet ist.

3. Wechselarmatur nach einem der vorangegangenen Ansprüche,
**dadurch gekennzeichnet,**
**dass** die Verschiebeachse (1c) der Messlanze parallel zu einer Drehachse des Rotors angeordnet ist.

4. Wechselarmatur nach einem der vorangegangenen Ansprüche,
**dadurch gekennzeichnet,**
**dass** der Elektromotor der Verstelleinrichtung ein Reluktanzmotor ist, bevorzugt ein geschalteter Reluktanzmotor oder ein Synchron-Reluktanzmotor ist.

5. Wechselarmatur nach einem der voranstehenden Ansprüche,
**dadurch gekennzeichnet,**
**dass** die Verstelleinrichtung eine Getriebeeinrichtung aufweist, bevorzugt mit einem Zykloidgetriebe und einem Spindeltrieb, wobei das Zykloidgetriebe zur Übertragung des durch den Elektromotor aufgebrachten Drehmoments auf den Spindeltrieb ausgebildet ist.

6. Wechselarmatur nach einem der Anspruch 5,
**dadurch gekennzeichnet,**
**dass** das Zykloidgetriebe der Getriebeeinrichtung eine Ausnehmung aufweist und die Verschiebeachse (1c) Messlanze (1) durch diese Ausnehmung verläuft.

7. Wechselarmatur nach Anspruch 5 oder 6,
**dadurch gekennzeichnet,**
**dass** das Zykloidgetriebe als zykloides Exzentergetriebe bevorzugt als mehrfach zykloides Exzentergetriebe, insbesondere bevorzugt als zweifach zykloides Exzentergetriebe ausgebildet ist.

8. Wechselarmatur nach den Ansprüchen 5 bis 7,
**dadurch gekennzeichnet,**
**dass** das Zykloidgetriebe eine Übersetzung von i= 5:1 bis i=100:1, bevorzugt i=8:1 bis i=15:1 aufweist.

9. Wechselarmatur nach den Ansprüchen 5 bis 8,
**dadurch gekennzeichnet,**
**dass** der Spindeltrieb der Getriebeeinrichtung eine Gewindespindel (10) und eine Spindelmutter (9) aufweist, wobei die Spindelmutter (9) drehbar auf der Gewindespindel (10) angeordnet ist und wobei die Spindelmutter (9) mit dem Zykloidgetriebe verbunden ist, insbesondere,
**dass** die Messlanze (1) als Gewindespindel (10) ausgebildet ist.

10. Verfahren zum Bestücken einer Wechselarmatur mit einem Sensor,
mit den Verfahrensschritten
Bereitstellen einer Wechselarmatur mit einem Befestigungselement (7) zum Anordnen an ein Behältnis (8), einer Messlanze (1) zum Aufnehmen eines Sensors und einer Verstelleinrichtung
wobei die Verstelleinrichtung einen Elektromotor mit einem Rotor (4) und einem Stator (3) aufweist und der Rotor (4) eine Ausnehmung aufweist;
Einführen des Sensors in die Messlanze (1), wobei der Sensor durch die Ausnehmung des Rotors (4) geführt wird.

11. Verfahren zum Einführen eines Messbereichs einer Messlanze (1) in ein Medium, mit den Verfahrensschritten
Bereitstellen einer Wechselarmatur mit einem Befestigungselement (7) zum Anordnen an ein Behältnis (8), einer Messlanze (1) zum Aufnehmen eines Sensors und einer Verstelleinrichtung,
wobei die Verstelleinrichtung einen Elektromotor mit einem Rotor (4) und einem Stator (3) aufweist und der Rotor (4) eine Ausnehmung aufweist und die Messlanze einen bevorzugt endständig angeordneten Messbereich (1b) aufweist, und wobei während des Einführens die Messlanze (1) mittels der Verschiebeinrichtung innerhalb der Ausnehmung des Rotors (4) bewegt wird.
